# EUROPEAN PATENT APPLICATION

(11) **EP 2 159 573 A1**
(43) Date of publication of application: **03.03.2010**
(21) Application number: 08163160.8
(22) Date of filing: 28.08.2008
(51) Int. Cl.: G01N 27/447

(54) **2D electrophoresis device and method of manufacturing**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

Device for a two-dimensional (2D) electrophoresis, comprising:
a. a first gel area (4) comprising a first gel in the form of an elongate strip extending in a first direction and with a first pair of electrodes (1, 2) arranged at the two ends of the strip
b. a second gel area (5) comprising a second gel adjacent to the first gel area (4) and extending in the first direction and a second direction with a second pair of electrodes (3) arranged at two sides of said second gel area and separated in the second direction; and
c. a channel (6, 7) arranged between the adjacent first gel area (4) and the second gel area (5) and switchable between an open state and a closed state.

## Description

### FIELD OF THE INVENTION

The invention refers to a two-dimensional (2D) electrophoresis device and a method of manufacturing such a device.

### BACKGROUND OF THE INVENTION

As the human genome becomes increasingly well understood, increasing attention is being placed on proteomics and metabolomics. A standard tool for proteomics is the 2D electrophoresis, where a tentative identification of a protein can be made by performing a separation with one technique in one dimension, followed by a second separation in a second dimension. This is a highly specific method and produces an array of spots and streaks.

In proteomics, the most commonly used 2D method is one in which isoelectric focusing (IEF) is used in one dimension, followed by gel electrophoresis (EP) in the second dimension. A planar gel is typically used. Once equilibrated and immersed in a buffer solution suitable for IEF, the focusing step is accomplished by the application of electric fields. In this step an initial sample volume is stretched into a line (containing bands) in the direction of the electric field. After the focusing step, the gel is re-equilibrated with a second buffer solution suitable for EP, a second electric field orthogonal to the first one is applied and the bands are separated along the direction of the second field to form spots.

The resulting spots may or may not be visible as separated. Proteins and, to some extent smaller molecules such as peptides, are immobilized to the film and can then be dyed (fluorescently or otherwise) for imaging. The presence or absence of a spot at a certain position in the gel (or a pattern of multiple spots, a so-called 'fingerprint') can be used as a medical diagnostic. Moreover, 2D can be used to detect a PTM (post-translational modification) of a protein biomarker.

To detect a specific protein the contents of a spot in the gel can be extracted for subsequent analysis. Thereto, a 'western blot' (immunoblot) can be carried out. The separated samples are typically electrically transferred from the gel onto a thin film of nylon or nitrocellulose, preferably containing antibodies specific to the target protein, laid atop the gel.

2D electrophoresis methods are critically important in the life sciences.

The present technology implies several limitations that relate to speed of the analysis and sensitivity. The re-equilibration of the sample after the first separation step takes a long time as it relies upon diffusion across large distances. In addition, running a gel is significantly slowed down due to the extreme need to avoid Joule heating effects in gels. Furthermore, the 2D gel systems are typically not automated and are therefore labor and time consuming. Another disadvantage of the current technique is that the re-equilibration and immobilization steps lose the smaller components of the sample, restricting 2D methods to proteins and, with difficulty, peptides. This will prevent the widespread application of this technique to metabolomics. In addition, the ampholytes commonly used in IEF are likely indistinguishable from many metabolites of interest, complicating or preventing application of the method in this area.

Thus, there is a need for the development of a more integrated, higher speed system since existing systems usually take as much as 3 days for a complete analysis. Even "fast" systems still need a day for complete analysis.

Several research projects aimed at miniaturized 2D electrophoresis. E.g., Herr et al. (A. E. Herr, J. I. Molho, K. A. Drouvalakis et al., "On-chip coupling of isoelectric focusing and free solution electrophoresis for multidimensional separations," Analytical Chemistry 75 (5), 1180-1187 (2003)) provided an interesting microchannel-based method of performing successive IEF and EP separations, each of which give an individual slice of a 2D gel and collectively therefore needing approximately 1 hour. Although potentially useful, this may be difficult to perform reproducibly, especially in terms of the re-equilibration step. Chen et al. (X. X. Chen, H. K. Wu, C. D. Mao et al., "A prototype two-dimensional capillary electrophoresis system fabricated in poly(dimethylsiloxane)," Analytical Chemistry 74 (8), 1772-1778 (2002)) presented what is essentially a smaller version of the macroscopic technique - it is not clear that the miniaturisation method (using PDMS) led to any advantages. Li et al. (Y. Li, J. S. Buch, F. Rosenberger et al., "Integration of isoelectric focusing with parallel sodium dodecyl sulfate gel electrophoresis for multidimensional protein separations in a plastic microfluidic network," Analytical Chemistry 76 (3), 742-748 (2004)) tried to implement a 2D method with a grid of intersection channels. The fluid control in this system is questionable, especially in terms of the re-equilibration step, and reproducibility is dubious. Wang et al. (Y. C. Wang, M. N. Choi, and J. Y. Han, "Two-dimensional protein separation with advanced sample and buffer isolation using microfluidic valves," Analytical Chemistry 76 (15), 4426-4431 (2004)) had a promising approach in which they integrated valves into the system to control the process more effectively. Although successful, the valves required considerable space, making this a system capable only of doing a slice of a 2D gel rather than the entire gel at once.

Furthermore, US 2006/0226010 Al discloses a 2D electrophoresis device in which an IEF gel strip is positioned in a cavity formed by two parallel substrates. Hydrophilic/hydrophobic treatments are used to direct the sample along one side of the IEF gel, whereupon it is absorbed completely and the IEF gel swells. The surface treatments are also used to dictate where the gel adheres to the cassette. After hydration by the sample, the cassette is then clamped more tightly to seal the IEF gel between two glass plates for IEF separation. This promotes complete use of the sample. After IEF and equilibration the cavity is filled with a pre-gel mixture , which is subsequently (UV)-polymerized. The resulting gel is in contact with the IEF strip and is used as EP gel for the second separation step.

WO 02/084273 discloses a 2D electrophoresis, where the IEF and EP steps are separated by using barriers and pneumatically assisted valves, which is a complex solution since basically all steps have to be carried out which are otherwise done manually.

EP 1 712 903 A1, discloses a method and device for integrated 2D electrophoresis involving a first separation in a first gel strip by IEF and a second separation in a second gel to determine the molecular size of the sample compounds. However, the disadvantage of their solution is that they still have to add the EP gel after the IEF step and re-equilibration stages. This will affect the properties of the sample. Moreover, it requires some specialized handling steps during use of the device, which makes their solution unsuitable for point-of care solutions.

US -A-20020100690 discloses a method for separating a sample in two or more components, using an IPG strip and a gel slab which are spaced apart and carried on a single generally planar support means. The strip and gel may be spaced apart by paraffin oil. In use, after a first separation has been carried out, the support means is tilted so that the first strip is at an angle to the horizontal and the paraffin oil flows out. Next agarose gel containing buffer is introduced into the gap to allow transfer of molecules from the strip to the gel slab.

This method requires several handling steps.

### SUMMARY OF THE INVENTION

It would now be desirable to provide an improved 2D electrophoresis device to overcome at least some of the above-mentioned limitations.

The present invention provides a device for two-dimensional (2D) electrophoresis, comprising a first gel area with a first gel in the form of an elongate strip extending in a first direction and with a first pair of electrodes arranged at the two ends of the strip. The device further comprises a second gel area with a second gel adjacent to the first gel area and extending in the first direction and a second direction with a second pair of electrodes arranged at two sides of said second gel area and separated in the second direction. Between the adjacent first gel area and second gel area the device comprises a channel which is switchable between an open state and a closed state.

In the closed state, the first gel and second gel are connected. In the open state, first gel and second gel are isolated from each other.

It is highly preferred that the channel at least comprises one hydrophobic region separating the first and second gel area.

Further, the switchable channel can additionally comprise a hydrophilic region and a
fluid channel connected to the switchable channel.

In the open state of the switchable channel first gel and second gel are isolated from each other and no fluid is injected. In the closed state of the switchable channel the channel may be filled with a fluid from the fluid channel, for example an electrically conductive fluid such as a buffer solution and analytes can pass.

With the asymmetric layout of the switchable channel bearing a hydrophilic region as well as a hydrophobic region the inlet of a fluid is enabled by capillary force. This makes the injection of a fluid into the area between the first and second gel from a connected fluid channel easy compared to the known valve systems, for example acting via a pressure driven membrane arrangement.

Preferred fluids to be used in the context of the embodiment can comprise SDS (sodium decyl sulphate) in a buffer solution as an equilibration buffer or a staining solution in order to stain the analytes when present in the first or second gel. The staining solutions may contain absorbing, fluorescent moieties or fluorescent labeled antibodies that selectively bind to the analytes.

The fluid channel can preferably be connected to a fluid reservoir which comprises a fluid pump.

The components of the fluid supply can advantageously be entirely integrated on the microfluidic device of the present invention. For example, the pump can contain a material that expands upon actuation by e.g. heat. Useful expanding materials upon actuation are such like polyethyleneglycol (PEG), PDMS containing Expancel (trademark name of Akzo Nobel) beads, which are microspheres consisting of a polymer shell encapsulating a gas, and the like. As a consequence of the actuation the fluid in the reservoir is pushed out into the fluid channel.

The fluid channel can be a trench-like channel or a hydrophilic path between hydrophobic areas. Advantageously, the fluid can be transported through the fluid channel into the switchable channel area of the device by capillary action. Like that, it is possible to insert the fluid linking the first and second gel. Subsequently, when analytes are present in the first gel they can be transferred into the second gel, for example by electrophoresis.

The first direction and the second direction are preferably perpendicular to each other, but they may also be oriented with another angle in between.

In an alternative embodiment, the device comprises at least 2, preferably a multitude of channels.

It is also advantageous that the second gel area extends in the second direction on both longitudinal sides of the first gel area, wherein a switchable channel is arranged at each of the two longitudinal sides of the first gel area.

The first and second gel may be an isoelectric focussing gel and an electrophoresis gel, respectively. However, other gels may be used as well. Another suitable combination of two gels is two electrophoresis gels, wherein the crosslink density in the second gel differs from the first gel. Yet another suitable combination of two gels is two electrophoresis gels, wherein
one of them may be a pore gradient gel (this gel may be characterized by a gradient in the crosslink density).

The state of the channel(s) may be switched from an open state to a closed state by filling the channel(s) with a suitable buffer which may preferably be under pressure. The buffer may comprise a suitable polymer (poly-(acrylamide), poly-(vinylalcohol), agarose) to form a (stacking) gel in the channel area.

In another embodiment the channel(s) comprise(s) a hydrophobic surface in the open state and a hydrophilic surface in the closed state. Then, the channel can be filled with a suitable buffer preferably via the fluid channel without the need of applying pressure.
hereto the surface of the switchable channel(s) and/or the exit of the fluid channel is/are preferably patterned with a thin switchable polymer layer, which can be switched between the hydrophobic and the hydrophilic state. For example, the switchable polymer layer may comprise poly-n-isopropylacrylamide, diethylacrylamide, carboxyisopropylacrylamide, hydroxymethylpropylmethacrylamide, acryloylalkylpiperazine. The switch between hydrophobic and hydrophilic state could then be induced by temperature. But other ways to switch between the two states are conceivable as well, likewise by the use of electrowetting. In the latter case, the device optionally comprises (a) further electrode(s) underneath the channel(s) in order to provide a voltage, which then switches the state of the channel(s). Other switching mechanisms include (UV) light induced switching of polar / apolar behaviour, which also induce a change of surface tension and therefore allows breaking of a hydrophobic stop. An example is shown in the next figure.

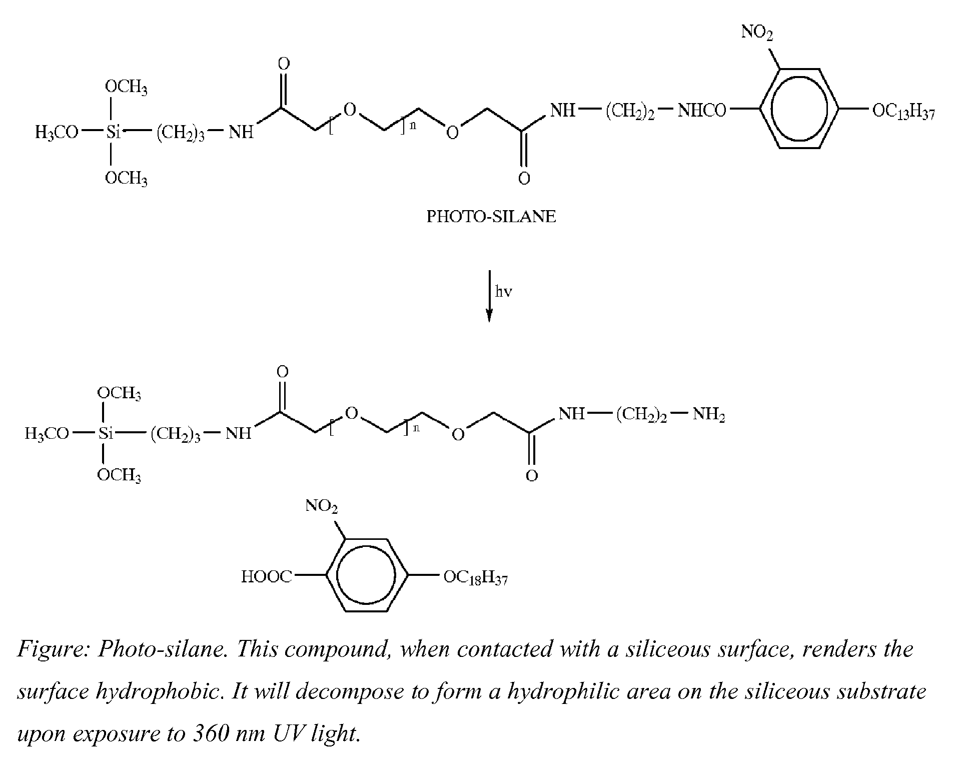

It is also contemplated to fill the channel(s) with a hydrophobic insulating fluid in the closed state, which can be expelled in order to switch to the open state. Said fluid may optionally comprise a hydrophobic polymer to tune the viscosity.

Furthermore, it may be possible to a use thin, solid, insulating barrier(s) as the channel(s) that could be removed to switch from an open to a closed state.

The present application also provides a method of manufacturing a 2D electrophoresis device as described above. Said method preferably comprises the following steps: evaporating a bind silane on a surface of a bottom substrate, producing a mask on top of the bind silane using standard lithography techniques and treating the surface with UV and/or ozone to (partly) remove the bind silane at the unmasked areas and to make the surface in these areas reactive. The method further comprises the steps of evaporating repel silane on the surface, removing the remains of the mask and repeating the abovementioned steps with a top substrate. Furthermore, the method comprises the steps of forming a cell by placing the top substrate onto the bottom substrate using spacers, filling the un-polymerized first and second gel into the cell; and polymerizing the first and second gel.

Therein, the bind silane preferably comprises methacryloxypropyltrimethoxysilane and the repel silane preferably comprises perfluorodecyltrichlorosilane.

In a preferred embodiment of the present invention, the method further comprises the step of pre-equilibrating the first and/or second gel with a suitable buffer.

The first gel is preferably an isoelectric focussing gel, in which case a suitable buffer may comprise ampholytes to obtain a pH gradient within the gel. Alternatively, an Immobiline-type gradient gel is used preferably comprising monomers that have pH-buffer capacity and are built in a gel matrix. A pH gradient may be created by using concentration gradients of monomers that buffer at different pHs. The second gel is preferably an electrophoresis gel. But other gels and buffers are conceivable as well.

The invention in another aspect relates to a method for carrying out a separation of sample in components wherein use if made of the device according to the invention, comprising the steps of:
a) carrying out a first electrophoresis step while the channel is in the open state
b) closing the channel
c) carrying out a second electrophoresis step:
   The second step is preferably preceded by transferring proteins/analytes from first to second gel trough the channel area. Subsequently separation of proteins/analytes in the second gel takes place.
   The closing of the channel will allow for movement of compounds from the first gel to the second gel.
   The device and method described above provide several advantages. The hydrophobic surfaces keep the two gels in terms of both electric current and buffers so that the gels can be kept hydrated yet contain different buffers. The switch is in particular suitable for 2D gel electrophoresis in which isoelectric focusing and subsequently electrophoresis is performed. Moreover, the hydrophobic surfaces are used to pattern both, isoelectric focusing and electrophoresis gels. Since no solid movable parts are used, the channels can be made much thinner (5 µm wide) than current valves, facilitating miniaturization and integration. The system described would be entirely hydrated and ready to use. In particular, there is no need to make a second gel part way through the process. So there is no polymerization step needed at the end-user side. The resulting 2D method is far faster than the existing methods and may lend itself to metabolomic applications.
   Another advantage of the claimed device is that it is simple to use and does not require tilting of the device to remove a barrier substance or the like.
   These and other aspects of the invention will be apparent from and elucidated with reference to the embodiments described hereinafter.

### BRIEF DESCRIPTION OF THE DRAWINGS

Fig. 1a schematically shows a preferred embodiment of a 2D electrophoresis device according to the present invention in a top view and a side view.
Fig. 1b schematically shows another preferred embodiment of a 2D electrophoresis device according to the present invention in a top view.
Fig. 2 schematically shows a process sequence of a manufacturing method of a 2D electrophoresis device according to the present invention.
Fig. 3 shows a photograph of an exemplary device after filling the centre channel with Bromophenol Blue.
Fig. 4a shows a photograph of an exemplary device after filling the hydrophobic channel.
Fig. 4b shows a photograph of the device of Fig. 4a after an electric field has been applied.
Fig. 5 schematically shows another preferred embodiment of a 2D electrophoresis device according to the present invention with a fluid supply.
Fig. 6 schematically shows another embodiment of the present invention incorporating a plurality of fluid channels which comprise staining solution.
Fig. 7 schematically shows four different examples, a to d, of layouts for the shape and position of hydrophobic regions in a device according to the present invention.

### DETAILED DESCRIPTION OF EMBODIMENTS

In the context of the invention, switchable in this context means that it is at least one time possible to change from one stable state to another stable state. In case of electrophoresis: the channel is switched from open state to closed state between a 1st and a 2nd separation step.

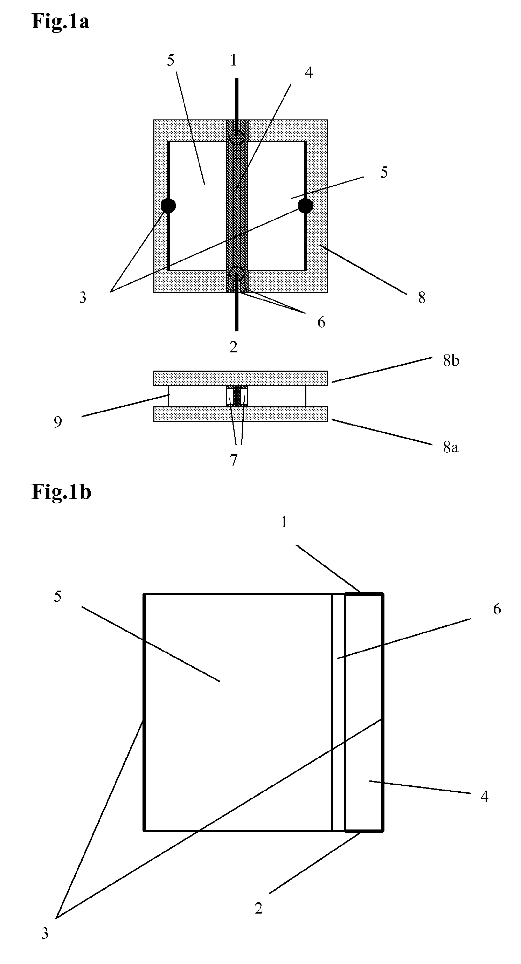

Fig. 1a shows a schematic device layout of a preferred embodiment of the present invention. The device comprises an isoelectric focusing (IEF) anode (1), an IEF cathode (2) and two electrophoresis (EP) electrodes (3). The area (4) between the IEF electrodes contains an IEF gel. Between the two EP electrodes is an EP gel area (5). The IEF gel area (4) and EP gel area (5) are separated by two hydrophobic areas (6). As becomes apparent in the side view, the hydrophobic areas (6) cause open channels (7), since none of the two gels can wet the hydrophobic surface. The gels are placed between a bottom substrate (8a) and a top substrate (8b). Glass would be a suitable material for the substrates, but other materials may be used as well.

The hydrophobic areas ensure separation between the IEF gel and the EP gel during manufacture. The IEF gel and EP gel monomer formulations can be introduced into the cavity (9) formed by the two opposing substrates (8a, 8b), which both comprise the hydrophobic patterns, e.g., by capillary action and are subsequently UV polymerized. The resulting IEF strip could be pre-equilibrated with an IEF buffer (containing ampholytes to obtain a pH gradient) and the other two regions could be pre-equilibrated with an EP buffer.

The two channels (7) adjacent the IEF gel act as valves. During the first 2D electrophoresis step, which is IEF in this case, their function as valves is 'closed' and prevent current leak and concomitant sample loss into the EP gel. Also the EP buffer is prevented from diffusing into the IEF channel. After the IEF step, filling the channels with a buffer closes the channels and their function as valves is 'open'. Since the channels are hydrophobic they are filled under a small pressure using, e.g., a syringe. The buffer contains sodium dodecyl sulphate (SDS) to re-equilibrate the sample. Then EP separation is conducted in the perpendicular direction by applying a voltage over the EP electrodes resulting in an array of spots and streaks specific for the sample used.

In a preferred embodiment the hydrophilic areas of the substrate (8) underneath the IEF gel area (4) and the EP gel area (5) contain an adhesion promoter, preferably a promoter which forms a chemical bond between the (glass) substrates and the gel, e.g. Methacryloxypropyltri-methoxysilane, often referred to as 'bind silane'.

The design of the device in Fig. 1a is symmetric to obtain homogenous electric fields, the invention is however not limited thereto.

Fig. 1b shows another preferred embodiment of the present invention. The second embodiment comprises only one hydrophobic area (6) between a first gel area (4) and a second gel area (5). However, this embodiment works according to the same underlying principle apart from the fact that in the second electrophoresis step only transport in one direction is possible.

Figs. 1a and 1b only show preferred embodiments of the present invention. However, other designs and geometries are conceivable as well.

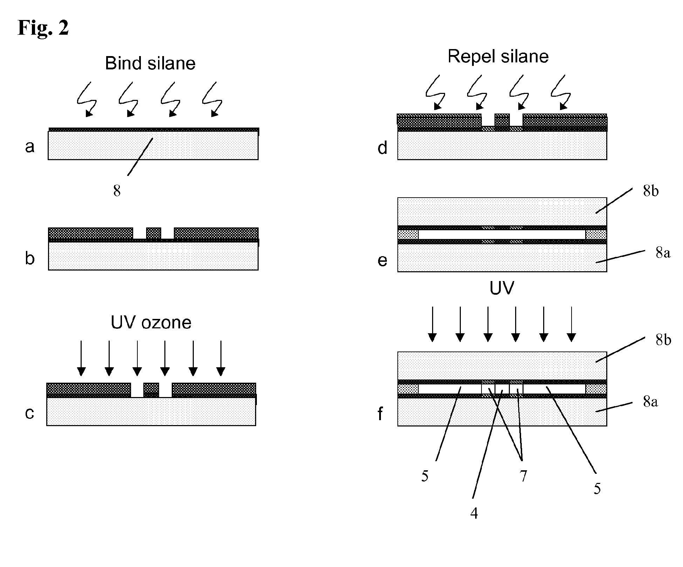

Fig. 2 schematically shows a process sequence of the manufacturing method according to a preferred embodiment of the present invention.

First, Methacryloxypropyltrimethoxysilane ('bind silane') is evaporated on both the top and bottom substrate (Fig. 2a), which may be, e.g., a glass substrate. The methacrylate functionalities of the bind silane are used to form covalent bonds between the glass and the gel materials.

Subsequently, the substrates are masked except for the areas where the hydrophobicity is desired (Fig. 2b). Standard lithography may be used for this purpose. However, the person skilled in the art will understand that a resist should be used that does not react with the bind silane on the substrate.

Then a UV-ozone treatment is applied to at least partially remove the bind silane in the areas adjacent the channel (Fig. 2c).

Subsequently, perfluorodecyltrichlorosilane ('repel silane') is evaporated to form the hydrophobic areas (Fig. 2d).

A cell is formed by placing the top substrate on top of the bottom substrate (Fig. 2e) and attaching the two substrates to each other, e.g., using a glue. Spacers keep the substrate at a distance. As a simple solution, 50 µm Scotch tape may be used, but of course standard lithographic spacers may be used as well. Aligning and coupling of the two substrates can be performed with standard LCD manufacturing equipment. However, aligning top and bottom substrate making use of hydrophobicity/hydrophilicity patterns is conceived as well. When bonding the substrates to each other, openings should be left in order to provide access to the cavity between the substrates. It is also possible to completely seal the cavity and provide access by drilling holes into, e.g., the top substrate.

After completion of the cell the cavities designated for the IEF and EP gel are filled with their respective hydrogel mixtures, either from the side (through openings in the glue which bonds the two substrates) or through holes in the top substrate (obtained, e.g., with diamond tip drilling or powder blasting). An example for a suitable mixture consists of 10 % acrylamide/bis-acrylamide (ratio 37.5:1), dissolved in a 300 mM pH 8.8 Tris-HCl buffer with 2wt% photoinitiator Irgacure 2959, but also alternative mixtures could be used. The hydrogel mixture for IEF could already contain the ampholite bearing-buffer, for example. The mixtures are purged for 10 minutes with nitrogen to remove the oxygen, which inhibits polymerization. After filling the cell is exposed to UV light in order to photopolymerize the gels (Fig. 2f).

Prior to the use of the device both IEF and EP gels are preferably equilibrated with their respective buffers. The sample, which is dissolved in an ampholite-bearing buffer is loaded in one of the two or both channels. Optionally, the device may also contain a third channel in the middle of the IEF strip for sample loading. By applying a voltage between the IEF anode and IEF cathode IEF is performed.

Subsequently, the hydrophobic channels adjacent the IEF strip are filled with a buffer to close the channels. The channel closest to the cathode is preferably filled with an SDS containing buffer. Applying a voltage between the EP anode and the EP cathode will drive the SDS in the IEF strip, in which the separated species (being neutral in their isoelectric point) will be re-charged according to their size. This will lead to separation on size in the second dimension.

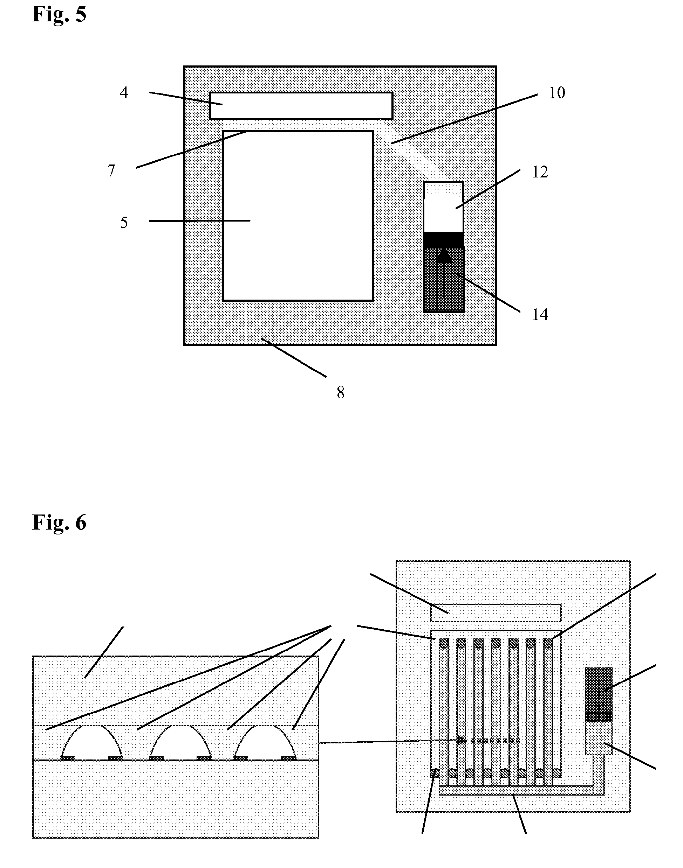

Fig. 5 schematically shows another preferred embodiment of a 2D electrophoresis device according to the present invention with a fluid supply. In order to close the channels by filling them with a buffer a fluid supply comprising a fluid channel (10) being connected to a fluid reservoir (12) and a fluid pump (14) is additionally positioned in the vicinity to the switchable channel. The pump can comprise an expandable material which can be expanded upon actuation, e.g. by heat. The exit of the fluid channel adjacent to the switchable channel between the two gel areas can be patterned with a switchable polymer so that the filling of the switchable channel with fluid can be started by switching the switchable polymer. Advantageously, no outside pressure is necessary to let the fluid flow from the fluid channel into the switchable channel because the fluid is transported by capillary force. However, it is also possible to apply some pressure onto the fluid inlet in order to fill the channel in a shorter time. Generally, the device according to this embodiment of the invention allows to reduce or even to omit the pressure which is needed to fill the channel with a fluid like a buffer solution or a staining solution.

Fig. 6 schematically shows another embodiment of the present invention incorporating a plurality of fluid channels which comprise staining solution. The fluid channel (10) is adjacent to switchable channels which are placed in the second gel area (5) being a PAGE gel. So, in this embodiment the first and second gel areas comprise the same type of gel. From the fluid reservoir (12) a staining solution can be filled into the switchable channels by use of the capillary force and optionally by use of the fluid pump (14), again comprising an expandable polymer material. During filling the air can escape through vents (15) in the top substrate (8b). The PAGE gel can be connected through holes (16) in the top substrate to apply the electrodes and the necessary buffers.

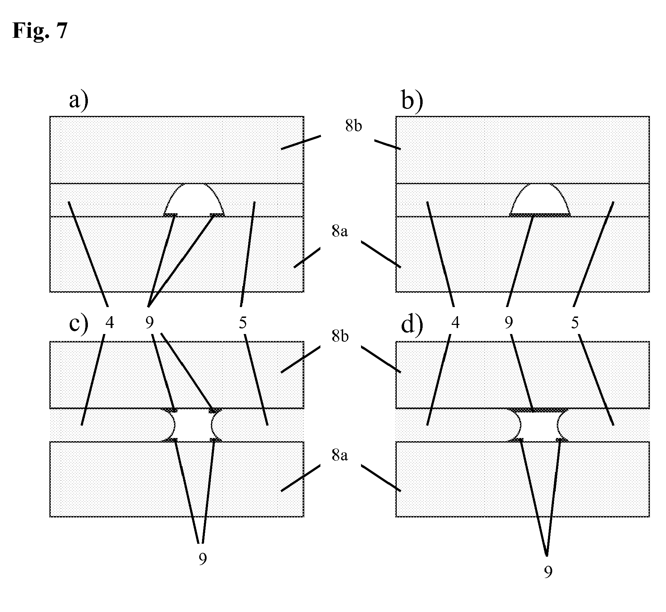

Fig. 7 schematically shows four different examples, a to d, of layouts for the shape and position of hydrophobic regions (9) in a device according to the present invention. Between the top and bottom substrate layers (8a, 8b) there is a first gel area (4) and a second gel area (5) located. The different gel areas are separated by a channel (6) which is in its shape and position defined by the hydrophobic regions (9). In Fig. 7a two hydrophobic regions (9) are positioned on the bottom substrate (8a), each defining a stop for the adjacent gel area (4, 5). Due to the capillary force, the respective gel areas (4, 5) touching the hydrophilic top substrate (8b) can extend beyond the position of the hydrophobic region (9). After polymerization of the gels the resulting channel forms a barrier for the electric currents and buffers possibly applied. When the channel is filled, for example with a buffer solution from an adjacent fluid channel, the gels (4, 5) become connected enabling electrophoresis in the direction perpendicular to the channel, or enabling staining the analytes when filled with a staining solution.

In Fig. 7b there is one continuous hydrophobic region (9) positioned on the bottom substrate (8a) separating the two different gel areas (4, 5). The region of the top substrate (8b) opposite to the hydrophobic region (9) is hydrophilic and again, due to the capillary force the two gel areas (4, 5) extend beyond the respective edges of the hydrophobic region (9).

In Fig. 7c there are two hydrophobic regions (9) positioned on the bottom substrate (8a) as in Fig. 7a and in addition there are two further hydrophobic regions (9) positioned opposite on the top substrate (8b). Thus, the shape of the resulting channel defined by the shape of the two gel areas (4, 5) is different from the previous examples in the preceding figures.

In Fig. 7d another example of a possible layout for the hydrophobic regions (9) is shown. Here, one continuous hydrophobic region (9) is positioned on the top substrate (8b) and two further hydrophobic regions (9) are placed opposite to the top region on the bottom substrate (8a). Again, due to the capillary force the shape of the resulting channel between the two gel areas (4, 5) is defined by the position of the hydrophobic regions (9).

The invention is illustrated by the following non-limiting example.

### Example

In the following an example is described in order to show the switchable valve function of the hydrophobic channels. An exemplary device was made according to the following procedure:
- Substrate cleaning: glass substrates were cleaned with soap Extran 02 (Merck), rinsed and blow-dried.
- 10 min. UV-ozone UVP-100
   Methacryloxypropyltrimethoxysilane (Fluka) deposition in a desiccator (1mBar) for 1 hour
   Masking: centre strip with LUMOCOLOR 313 permanent S marker, width approx. 500 µm. EP areas with scotch tape. The hydrophobic channels are approx. 500 µm wide. Length of the center strip is approx. 2 cm
- 15 min. UV-ozone UVP-100
- 1H,1H,2H,2H-Perfluorodecyltrichlorosilane (ABCR) deposition in desiccator (1mBar) for 1 hour)
- Removal of scotch tape
- Rinse with isopropanol to remove marker ink.
- Applying 50 µm spacers (Scotch tape) on bottom substrate
- Aligning of top and bottom substrate under a microscope (patterns on both substrates were visible).
- Hydrogel mix: 10 % acrylamide/bis-acrylamide (ratio 37.5:1), dissolved in a 300 mM pH 8.8 Tris-HCl buffer with 2wt% photoinitiator Irgacure 2959, flushed with nitrogen for approx 10 minutes.
- Filling of center channel and other two hydrophilic regions by using Eppendorf 1-10 µl syringe
- UV-exposure (Thermo-Oriel, 10 mWcm⁻²) in N₂-chamber for 10 minutes.

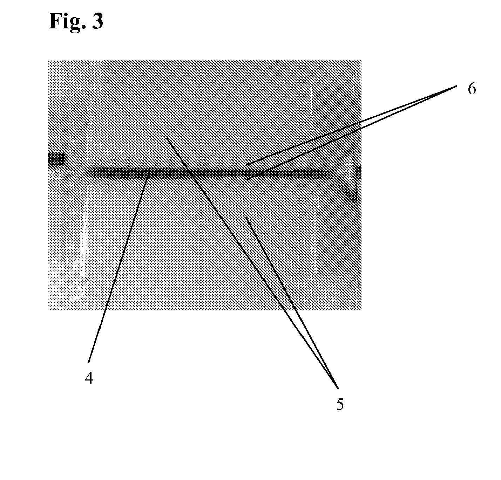

The cathode side of the IEF gel was loaded with 0.6% Bromophenol Blue (Sigma-Aldrich) in a 300 mM pH 8.8 Tris-HCl buffer. This blue dye is slightly negatively charged at pH 8.8. By applying 200V the center channel was filled as can be seen in Fig. 3. No dye was observed to cross the hydrophobic channels.

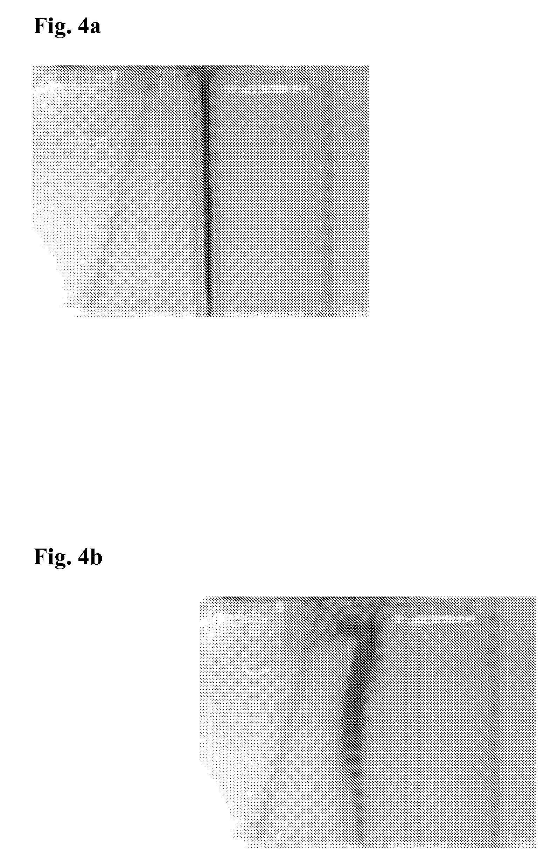

Subsequently, the hydrophobic channels were filled with 300mM pH 8.8 Tris-HCl buffer by using a syringe. Fig. 4a shows the device after filling the channels. Virtually all the dye remained in the central gel strip. By applying 200V over the gels perpendicular to the central gel strip the blue dye was moved in the direction of the anode as can be seen in Fig. 4b.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. Device for a two-dimensional (2D) electrophoresis, comprising:
a) a first gel area (4) comprising a first gel in the form of an elongate strip extending in a first direction and with a first pair of electrodes (1, 2) arranged at the two ends of the strip
b) a second gel area (5) comprising a second gel adjacent to the first gel area (4) and extending in the first direction and a second direction with a second pair of electrodes (3) arranged at two sides of said second gel area and separated in the second direction; and
c) a channel (6, 7) arranged between the adjacent first gel area (4) and the second gel area (5) and switchable between an open state and a closed state.

2. Device according to claim 1 in which the channel (6, 7) comprises a hydrophobic region separating the first and second gel area.

3. Device according to claim 2 in which the switchable channel (6, 7) comprises a hydrophilic region and a fluid channel (10) connected to the switchable channel.

4. Device according to claim 3 wherein the fluid channel (10) is connected to a fluid reservoir (12) which comprises a fluid pump (14).

5. Device according to claim 3 wherein the fluid channel (10) is a trench-like channel or a hydrophilic path between hydrophobic areas.

6. Device according to claim 1, wherein the first direction and the second direction are perpendicular to each other.

7. Device according to claim 1 or 2, wherein the second gel area (5) extends in the second direction on both longitudinal sides of the first gel area (4) and wherein a switchable channel is arranged at each of the two longitudinal sides of the first gel area (4).

8. Device according to any one of the previous claims, wherein the channel(s) comprise(s) a hydrophobic region in the opened state and a hydrophilic region in the closed state.

9. Device according to claim 1, wherein the channel(s) can be closed by enforced filling with a buffer.

10. Device according to claim 1 or 3, wherein the surface of the switchable channel(s) (6, 7) and/or the exit of the fluid channel (10) is/are at least partly patterned with a thin switchable polymer layer, which can be switched between the hydrophobic and the hydrophilic state.

11. Device according to claim 10, wherein the switchable polymer layer comprises poly-n-isopropylacrylamide.

12. Device according to claim 10, wherein the switch between hydrophobic and hydrophilic is induced by temperature.

13. Device according to any one of the previous claims, comprising a further channel dividing the first and/or second gel area into two separated parts.

14. Method of manufacturing a 2D electrophoresis device according to claim 1, comprising the following steps:
a) evaporating a bind silane on a surface of a bottom substrate;
b) producing a mask on top of the bind silane using standard lithography techniques;
c) treating the surface with UV and/or ozone to remove the bind silane at the unmasked areas;
d) evaporating repel silane on the surface;
e) removing the remains of the mask;
f) repeating steps a) to e) with a top substrate;
g) forming a cell by placing the top substrate onto the bottom substrate using spacers;
h) filling the un-polymerized first and second gel into the cell; and
i) polymerizing the first and second gel.

15. Method according to claim 14, wherein the bind silane comprises methacryloxypropyltrimethoxysilane.

16. Method according to claim 14 or 15, wherein the repel silane comprises perfluorodecyltrichlorosilane.

17. Method for carrying out a separation of sample in components wherein use is made of the device according to claim 1, comprising the steps of:
aa) carrying out a first electrophoresis step while the channel is in the open state
b) closing the channel
c) carrying out a second electrophoresis step.

18. Method according to claim 17, wherein the step b) comprises inserting a fluid from a fluid channel (10) being connected to a fluid reservoir (12) which comprises a fluid pump (14).
